# DEMANDE DE BREVET EUROPEEN

(11) **EP 3 808 442 A1**
(43) Date de publication de la demande: **21.04.2021**
(21) Numéro de dépôt: 20201584.8
(22) Date de dépôt: 13.10.2020
(51) Int. Cl.: B01J 8/04, B01J 8/06, B01J 12/00, C10L 3/08

(54) **RÉACTEUR ÉCHANGEUR À TUBES ET CALANDRE PERMETTANT L INJECTION ÉTAGÉE D'UN RÉACTIF**

(30) Priorité: 17.10.2019 FR 1911593
(71) Demandeur: Commissariat à l'Énergie Atomique et aux Énergies Alternatives, 75015 Paris (FR)
(72) Inventeur: BENGAOUER, Alain, 38054 GRENOBLE Cedex 09 (FR)
(74) Mandataire: Brevalex

(57) **Abrégé**

L'objet principal de l'invention est un réacteur échangeur à tubes et calandre (1), caractérisé en ce qu'il comporte : une enceinte formant calandre (2), comprenant un fond supérieur (3) et un fond inférieur (4) ; un faisceau de tubes (5) à l'intérieur de la calandre (2) comprenant au moins un catalyseur; un premier et unique moyen d'injection d'entrée (6) d'un premier réactif en entrée (E) du réacteur échangeur (1) ; une pluralité de deuxièmes moyens d'injection (7a, 7b, 7c) d'un deuxième réactif en plusieurs endroits distincts du réacteur échangeur (1) de sorte à assurer une injection étagée du deuxième réactif; une ou plusieurs cloisons de retournement (8a, 8b ; 9a, 9b), chacune délimitant deux zones de passe (Z1, Z2, Z3) de réactifs), et au moins un moyen de communication (10a, 10b) permettant une communication fluidique entre deux zones de passe délimitées.

## Description

### DOMAINE TECHNIQUE

La présente invention se rapporte au domaine général des réacteurs échangeurs destinés à la mise en œuvre de réactions endothermiques ou exothermiques.

L'invention trouve de nombreuses applications dans tous types de procédés mettant en œuvre des réactions endothermiques ou exothermiques, et notamment fortement endothermiques ou exothermiques, ayant lieu en phase liquide, en phase gaz ou en présence d'une phase liquide et d'une phase gaz. De tels procédés peuvent par exemple utiliser un catalyseur solide, notamment sous forme de poudre.

Ces procédés peuvent notamment comprendre des procédés de synthèse de carburants et de combustibles, par exemple des combustibles liquides, tels que le méthanol (MeOH), ou gazeux, tels que le méthane ou substitut de gaz naturel (SNG pour « Synthetic Natural Gas » en anglais) ou le diméthyléther (DME), obtenus à partir d'hydrogène et d'oxydes de carbone ou à partir de gaz de synthèse comprenant un mélange d'hydrogène et d'oxydes de carbone.

L'invention peut ainsi être tout particulièrement appliquée à toutes les situations où la maîtrise de la température est un point crucial, notamment à des réactions très endothermiques ou très exothermiques, catalytiques ou non catalytiques, telles que celle de méthanation du monoxyde ou du dioxyde de carbone en présence d'hydrogène ou encore des réactions du type de celle de Fischer-Tropsch, de celle de reformage humide ou à sec du méthane ou d'autres hydrocarbures, ou encore des réactions d'oxydation. En effet, le problème de la gestion thermique de ces réactions, notamment celles fortement exothermiques de méthanation du monoxyde ou du dioxyde de carbone en présence d'hydrogène, est crucial car l'évolution de la température dans le réacteur échangeur conditionne le taux de conversion et la sélectivité vers le méthane de la réaction, ainsi que la stabilité dans le temps des performances du catalyseur. Une température basse est favorable au déplacement de l'équilibre thermodynamique vers le méthane, ce qui est souhaité, cependant l'activité des catalyseurs suit une loi d'Arrhénius et est donc favorisée à haute température. Une spécificité des réacteurs échangeurs dédiés à la mise en œuvre de ces réactions est de permettre l'évacuation de la chaleur de réaction dans des conditions permettant le contrôle de la température des catalyseurs.

De plus, ces réactions sont thermodynamiquement favorisées par des pressions élevées. Dans la pratique, des pressions de 5 à 50 bars sont utilisées.

Préférentiellement, l'invention trouve son application dans la synthèse du méthane selon un procédé de conversion d'électricité en gaz (ou encore de type « Power-to-Gas » en anglais), c'est-à-dire dans lequel l'hydrogène provient de la dissociation de l'eau par électrolyse, tel qu'enseigné dans la publication « Materials Science and Engineering », A179/A180, 1994, K. Hashimoto. La puissance électrique est alors fournie par des énergies renouvelables, par exemple de type éolien ou solaire, par nature intermittentes, ce qui induit un fonctionnement intermittent du réacteur de conversion qui doit fournir des temps de démarrage et de suivi de charge aussi courts que possible, ce qui nécessite des inerties thermiques réduites.

Dans ce contexte d'application « Power-to-Gas », si des unités de très petite taille sont parfois envisagées, typiquement de l'ordre de 0,5 à 1 MWe, des unités de taille moyenne, typiquement de l'ordre de 5 à 50 MWe, ou de grande taille, typiquement de l'ordre de 50 à 300 MWe, sont généralement préférées pour permettre des économies d'échelles. Un second paramètre essentiel est la durée d'utilisation des unités, le coût de production de substitut de gaz naturel (SNG) diminuant fortement en fonction du nombre d'heures d'utilisation.

Néanmoins, il est à noter que l'invention n'est pas limitée à la méthanation du monoxyde ou du dioxyde de carbone, ni même à une réaction entre des phases gazeuses, ni même encore aux seules réactions nécessitant un catalyseur. Aussi, de façon générale, on peut remarquer qu'au moins une réaction impliquant au moins deux, voire trois fluides se produit dans les canaux du réacteur échangeur.

L'invention propose ainsi un réacteur échangeur à tubes et calandre permettant l'injection (ou encore distribution) d'un réactif.

### ÉTAT DE LA TECHNIQUE ANTÉRIEURE

On connaît déjà de nombreuses architectures de réacteurs échangeurs catalytiques utilisés dans l'industrie pour assurer le contrôle et le pilotage thermique de réactions chimiques endothermiques ou exothermiques. Les principaux types de réacteurs échangeurs connus pour les réactions exothermiques sont décrits ci-après.

Tout d'abord, la technologie la plus simple de réacteurs échangeurs catalytiques est la technologie de réacteurs dits « à lit fixe ». Dans ce cas, le réacteur échangeur se présente sous la forme d'un cylindre, à l'intérieur duquel le catalyseur est placé. Le catalyseur peut être présent sous la forme de granulés, par exemple du type extrudats, sphères ou anneaux de Raschig, entre autres. L'apport ou l'évacuation des calories sont généralement opérés par un fluide caloporteur qui circule dans un serpentin situé sur la paroi externe du réacteur ou qui est directement introduit à l'intérieur du réacteur.

La mise en œuvre de réactions exothermiques au sein de ce type de réacteur échangeur pose de nombreuses difficultés. En effet, la mauvaise dissipation de la chaleur, due principalement à la faible conductivité thermique de l'ensemble formé par le gaz et le catalyseur, entraîne la formation de points chauds au sein du réacteur. Or, la présence de ces points chauds localisés entraîne des vitesses de réaction plus importantes et peut être à l'origine d'un emballement thermique du réacteur. Aussi, ces températures élevées peuvent nuire aux performances du réacteur échangeur, entraînant notamment une baisse de sélectivité ou de conversion, causer la désactivation du catalyseur, et ainsi diminuer grandement sa durée de vie et poser des problèmes de sécurité.

Dans le cas de réactions endothermiques, la formation de points froids est moins problématique car elle n'entraîne pas d'emballement thermique du réacteur. Cependant, ces points froids entraînent toujours une baisse importante des performances du réacteur échangeur.

Par ailleurs, ce type de réacteur échangeur à lit fixe présente aussi l'inconvénient d'engendrer une perte de charge élevée à travers le lit catalytique.

L'utilisation de réacteurs échangeurs à lits fixes multitubulaires permet d'augmenter l'efficacité de la gestion thermique de ces réacteurs. De tels réacteurs sont constitués de plusieurs tubes, de quelques centimètres de diamètre, remplis de catalyseur et placés dans une enceinte (ou calandre) où circule le fluide caloporteur. L'utilisation de tubes plus étroits peut cependant conduire à des phénomènes de court-circuit hydraulique (ou « by-pass » en anglais) aux parois, qui participent à la formation de points chauds et réduisent le temps de contact des réactifs avec le catalyseur, entraînant ainsi une diminution des performances du réacteur échangeur. De plus, la diminution de la taille des grains de catalyseur pouvant accompagner la réduction du diamètre des tubes, elle entraîne également une augmentation de la perte de charge. En outre, la gestion thermique de ce type de réacteur échangeur demeure parfois toujours insuffisante.

Par ailleurs, les solutions mises en place pour contrôler les réactions fortement exothermiques sont souvent complexes et coûteuses. Il peut s'agir par exemple de la dilution du catalyseur par des particules inertes, du recyclage de gaz, de la distribution des réactifs le long des réacteurs ou de manière étagée entre plusieurs réacteurs, ou encore de la dilution des réactifs par un gaz inerte. Dans tous les cas, ces solutions ont pour but de diminuer les vitesses de réaction et l'efficacité catalytique du réacteur échangeur afin de pouvoir contrôler l'exothermie de la réaction.

Aussi, l'architecture du type « à lit fixe » des réacteurs échangeurs présente l'avantage de la simplicité de fabrication mais rend difficile le contrôle thermique et nécessite l'utilisation de catalyseurs stables à haute température.

Une autre technologie de réacteurs échangeurs concerne les réacteurs échangeurs structurés. Inspirés des échangeurs thermiques à plaques, ces réacteurs échangeurs dans lesquels le fluide caloporteur circule dans des canaux caloporteurs insérés entre deux nappes de canaux réactifs pour leur refroidissement, où se trouve le catalyseur et où a lieu la réaction chimique, se prêtent mieux au contrôle de la température des procédés. En effet, la structuration et surtout la réduction de la section de passage du fluide caloporteur par rapport à une simple calandre permet d'intensifier les échanges thermiques entre le fluide caloporteur et le réacteur afin d'évacuer ou d'apporter des calories avec une meilleure efficacité. Pour de tels réacteurs échangeurs, les canaux réactifs, comme les canaux caloporteurs, peuvent être constitués d'un canal gravé dans une plaque ou encore constitués par l'espace laissé entre deux plaques. Selon la technologie choisie pour le refroidissement, ces réacteurs peuvent être isothermes ou anisothermes.

Par ailleurs, il existe également la technologie des réacteurs échangeurs à lits fluidisés. De tels réacteurs ont été développés pour répondre au problème de transfert thermique dans les lits fixes. Ces réacteurs présentent la particularité de mettre en mouvement les grains de catalyseur, d'une taille de l'ordre de la centaine de micromètres, ce qui permet un mélange qui améliore les transferts. Les réacteurs échangeurs à lits fluidisés offrent l'avantage d'une bonne homogénéité thermique dans les réacteurs, ce qui évite les points chauds. De plus, cette technologie présente de nombreux autres inconvénients, et notamment la formation de particules fines entraînées en dehors du réacteur, des difficultés d'extrapolation en taille ou encore des performances moindres en raison de rétro-mélanges dus au mouvement du catalyseur.

La combinaison de réacteurs échangeurs du même type ou de types différents au sein d'une même unité peut également être envisagée afin d'améliorer la conversion, la flexibilité ou la valorisation de la chaleur récupérée.

Ainsi, par exemple, le brevet US 4,298,694 B1 propose de combiner un réacteur échangeur adiabatique et un réacteur échangeur isotherme dont chacun traite une partie du flux d'entrée de gaz afin de récupérer la chaleur de réaction sous la forme de vapeur surchauffée, laquelle est obtenue par un échangeur connecté en sortie de l'étage adiabatique, tout en produisant un gaz à forte teneur en méthane grâce à la faible température obtenue en sortie du réacteur échangeur isotherme.

Par ailleurs, il est connu de l'homme du métier que la mise en place en série de plusieurs réacteurs offre une souplesse supplémentaire. Par exemple, l'injection des réactifs peut être étagée entre plusieurs réacteurs, ce qui limite le dégagement de puissance de chacun et permet un meilleur contrôle thermique.

### Dispositifs d'injection étagée dans un réacteur échangeur

Il est généralement recherché de ne pas recourir à l'utilisation d'une recycle de gaz afin de limiter la consommation d'énergie en opération et de simplifier les changements de régime. Dans ce cas, et pour éviter une élévation de température trop importante pouvant notamment conduire à une dégradation rapide du catalyseur par frittage des particules métalliques, une injection étagée des réactifs est souvent mise en œuvre.

L'avantage de recourir à une injection étagée peut être illustré par la réalisation d'une simulation numérique. Une réaction de méthanation est simulée numériquement par la résolution du modèle hétérogène. Un mélange H₂-CO₂ stœchiométrique pour la réaction de méthanation est injecté, soit totalement en entrée du réacteur, soit pour partie en entrée et pour partie en deux points d'injection distants respectivement de 35 mm et 112 mm de l'entrée. Le mélange entre à une température fixée entre 270°C et 320°C et les parois du réacteur sont maintenues à la même température, fixée entre 270°C et 320°C. La pression en sortie du réacteur est maintenue à 2,5 bars (absolu). Un catalyseur constitué de Nickel dispersé sur un support d'alumine est utilisé. L'évolution des fractions molaires, de la conversion (taux de conversion de CO₂ désigné par X CO₂) et de la température maximale (T max) du gaz et du catalyseur est étudiée pour les configurations suivantes :
Cas 1 : 100% du débit injecté en entrée du réacteur;
Cas 2 : 25% du débit en entrée du réacteur, 25% au premier point d'injection, 50% au second point d'injection ;
Cas 3 : 20% du débit en entrée du réacteur, 40% au premier point d'injection, 40% au second point d'injection ;
Cas 4 : 10% du débit en entrée du réacteur, 40% au premier point d'injection, 50% au second point d'injection.

Les principaux résultats sont décrits dans le Erreur ! **Source du renvoi introuvable.** ci-dessous :

**Tableau 1 : températures maximales et taux de conversion de CO₂ obtenus par simulation pour quatre cas pour des températures variant de 270°C à 320°C**

| | 270°C | | 280°C | | 300°C | | 320°C | |
|---|---|---|---|---|---|---|---|---|
| | T max | X CO₂ | T max | X CO₂ | T max | X CO₂ | T max | X CO₂ |
| Cas 1 | 490 | 78% | 517 | 82% | - | - | - | - |
| Cas 2 | 369 | 46% | 390 | 51% | 419 | 71% | - | - |
| Cas 3 | 338 | 44% | 366 | 50% | 397 | 69% | 422 | 82% |
| Cas 4 | 295 | 44% | 319 | 51% | 352 | 62% | 385 | 82% |

Il apparait dans cet exemple par comparaison du Cas 1 à 270°C et du Cas 4 à 320°C que l'utilisation de trois zones d'injections (Cas 4) permet d'obtenir un taux de conversion de CO₂ de 82% pour une température maximale dans le catalyseur de 385°C alors que l'injection de la totalité des réactifs en un seul point (Cas 1) conduit à un taux de conversion plus faible (78%) et une température de catalyseur plus élevée (490°C).

En conséquence, l'injection étagée de réactifs, associée à une augmentation de la température du caloporteur est donc un moyen efficace de contrôler la température maximale dans le réacteur échangeur et le taux de conversion de réactif.

### Dispositifs d'injection étagée dans un réacteur tube-calandre

L'injection étagée de réactifs dans un réacteur tube-calandre est une solution connue dans le cas de réacteurs tubulaires. Dans une disposition classique, les gaz réactifs arrivent déjà mélangés via la tubulure d'entrée et sont distribués dans un ensemble de tubes verticaux emplis de catalyseur. La chaleur de réaction est évacuée via un fluide caloporteur circulant à l'extérieur de ces tubes. La circulation de ce fluide caloporteur peut être organisée en plusieurs passes de façon à accélérer la vitesse d'écoulement et donc l'échange thermique ou en plusieurs circuits si des températures différentes de fluide caloporteur sont souhaitées. Cependant, cette solution nécessite la mise en place d'un tube d'injection percé de multiples ouvertures dans chacun des tubes du réacteur tubulaire, comme enseigné dans le brevet américain US 8,961,909 B2, ce qui induit une complexité importante lors de la fabrication et du remplissage du catalyseur. Un autre inconvénient de ce dispositif est que lorsqu'une modification de la distribution des gaz est nécessaire, tous les tubes, au nombre de quelques centaines à quelques milliers, doivent être déplacés.

L'injection étagée de réactifs dans un réacteur tube-calandre peut aussi être réalisée par l'interruption du lit et l'introduction à chaque interruption d'un dispositif d'injection. Là encore, la conception du réacteur est plus complexe et le nombre d'injections possibles est limité par la complexité croissante du dispositif. Une illustration de ce concept appliqué à l'oxydation partielle du méthane est divulguée dans la demande de brevet américain US 2006/0029539 A1 et une autre encore dans la demande de brevet français FR 2 813 024 A1. Bien que ces deux exemples ne portent pas spécifiquement sur des réacteurs tubulaires, il est envisageable, mais difficile à réaliser techniquement, de transposer ce concept à des réacteurs tubulaires.

Ainsi, l'injection étagée de réactifs, dans un réacteur tubulaire nécessite d'insérer dans chacun des tubes réactifs un dispositif assurant l'étagement de l'injection ou d'interrompre le lit pour intercaler un dispositif d'injection. Dans les deux cas, il s'agit de dispositions rendant la fabrication et le renouvellement de catalyseurs plus difficile et coûteux.

### Dispositifs d'injection étagée dans un réacteur échangeur à plaques

Les réacteurs échangeurs à plaques permettent de lever les limitations inhérentes aux réacteurs « à lit fixe » adiabatiques et aux réacteurs « structurés » à tube-calandre. Ils utilisent une superposition de canaux réactifs et de canaux de refroidissement dont les dimensions réduites permettent d'augmenter drastiquement les transferts de masse et de chaleur au sein du réacteur. La compacité et l'efficacité en termes de conversion et de sélectivité peuvent ainsi être améliorées.

Parmi les techniques connues de l'homme du métier pour l'assemblage de plaques préalablement usinées, on peut par exemple citer : l'assemblage par brasage de plaques usinées; l'assemblage par soudage par fusion avec ou sans apport de matière (laser, faisceau d'électrons (FE), TIG, ...) ; l'assemblage par soudage par diffusion à l'état solide, entre autres.

L'introduction de l'injection étagée d'un réactif ou de plusieurs réactifs est aussi possible en introduisant une pluralité de canaux supplémentaires qui canalisent le fluide réactif jusqu'à son point d'injection.

Par exemple, la demande de brevet FR 3 074 067 A1 montre qu'en réalisant des usinages judicieusement placés, il est possible d'alimenter directement une pluralité de canaux. La transposition de cette technique à un grand nombre de canaux est possible mais cependant limitée par le grand nombre d'usinage à réaliser.

Par ailleurs, la demande de brevet FR 1851 654 A1 propose une méthode astucieuse pour réutiliser un ensemble de canaux existants afin de réaliser l'injection étagée. En ce sens, il permet de traiter des réacteurs à plus grand nombre de canaux, mais reste délicat et coûteux à mettre en œuvre.

En conséquence, l'injection étagée de réactifs, dans un réacteur échangeur à plaques nécessite d'introduire des canaux supplémentaires pour réaliser l'injection. La transposition de cette technique à un réacteur de grande taille comprenant un grand nombre, typiquement de plusieurs centaines à plusieurs milliers, de canaux est cependant limitée à cause du grand nombre d'usinage nécessaires.

### EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, un réacteur échangeur à tubes et calandre, destiné à la mise en œuvre de réactions endothermiques ou exothermiques, caractérisé en ce qu'il comporte :
- une enceinte verticale formant calandre, comprenant un fond supérieur et un fond inférieur,
- un faisceau de tubes verticaux, s'étendant entre le fond supérieur et le fond inférieur, à l'intérieur de la calandre, et comprenant au moins un catalyseur,
- un premier et unique moyen d'injection d'entrée d'un premier réactif, notamment du dihydrogène, en entrée du réacteur échangeur,
- une pluralité de deuxièmes moyens d'injection d'un deuxième réactif, distinct du premier réactif, en plusieurs endroits distincts du réacteur échangeur de sorte à assurer une injection étagée du deuxième réactif, les deuxièmes moyens d'injection comprenant au moins un deuxième moyen d'injection d'entrée de deuxième réactif en entrée du réacteur échangeur,
- une évacuation du produit formé en sortie du réacteur échangeur, l'un du fond supérieur et du fond inférieur comportant une ou plusieurs cloisons de retournement, chacune délimitant deux zones de passe de réactifs s'étendant sur toute la hauteur verticale du réacteur échangeur, et l'autre du fond supérieur et du fond inférieur comportant une ou plusieurs cloisons de retournement, chacune délimitant deux zones de passe de réactifs s'étendant sur toute la hauteur verticale du réacteur échangeur et au moins une cloison de retournement comprenant au moins un moyen de communication permettant une communication fluidique entre les deux zones de passe délimitées par ladite au moins une cloison de retournement,
le premier et unique moyen d'injection d'entrée et ledit au moins un deuxième moyen d'injection d'entrée de deuxième réactif en entrée du réacteur échangeur étant situés au niveau de l'un du fond supérieur et du fond inférieur, et au moins un deuxième moyen d'injection étant situé au niveau de l'autre du fond supérieur et du fond inférieur de sorte que les premier et deuxième réactifs parcourent une pluralité de fois la hauteur verticale du réacteur échangeur réalisant une pluralité de passes par le biais des zones de passe.

Le réacteur échangeur selon l'invention peut en outre comporter l'une ou plusieurs des caractéristiques suivantes prises isolément ou suivant toutes combinaisons techniques possibles.

Le premier moyen d'injection d'entrée, prévu pour l'injection du premier réactif en entrée du réacteur échangeur, peut être distinct dudit au moins un deuxième moyen d'injection d'entrée, prévu pour l'injection du deuxième réactif en entrée du réacteur échangeur. En variante, et de façon avantageuse, ledit au moins un deuxième moyen d'injection d'entrée peut correspondre au premier moyen d'injection d'entrée, étant ainsi confondus l'un avec l'autre. De cette façon, un seul premier moyen d'injection d'entrée est prévu pour l'injection d'un mélange du premier réactif et du deuxième réactif en entrée du réacteur échangeur. Il est ainsi possible d'économiser un organe d'injection.

Ledit l'un du fond supérieur et du fond inférieur peut comporter plusieurs cloisons de retournement, au moins une cloison de retournement comprenant au moins un moyen de communication permettant une communication fluidique entre les deux zones de passe délimitées par ladite au moins une cloison de retournement. Ledit l'autre du fond supérieur et du fond inférieur peut comporter plusieurs cloisons de retournement, au moins deux cloisons de retournement comprenant chacune au moins un moyen de communication permettant une communication fluidique entre les deux zones de passe délimitées par ladite au moins une cloison de retournement.

Par ailleurs, ledit l'un du fond supérieur et du fond inférieur peut être le fond supérieur. Ledit l'autre du fond supérieur et du fond inférieur peut être le fond inférieur. Le premier et unique moyen d'injection d'entrée et ledit au moins un deuxième moyen d'injection d'entrée de deuxième réactif en entrée du réacteur échangeur peuvent être situés au niveau du fond supérieur, et au moins un deuxième moyen d'injection peut être situé au niveau du fond inférieur.

De plus, les tubes peuvent avantageusement être positionnés dans les zones de passe de sorte à être non superposés verticalement avec la ou les cloisons de retournement.

Selon une première réalisation, le réacteur échangeur peut se présenter sous une configuration dite en « secteurs angulaires », la calandre étant de forme cylindrique et la ou les cloisons de retournement de chacun du fond supérieur et du fond inférieur délimitant le fond supérieur et le fond inférieur en au moins deux sections angulaires correspondant à au moins deux zones de passe.

En particulier, le réacteur échangeur peut comporter quatre deuxièmes moyens d'injection du deuxième réactif dont deux sont situés au niveau dudit l'un du fond supérieur et du fond inférieur et deux sont situés au niveau dudit l'autre du fond supérieur et du fond inférieur correspondant à la présence de quatre zones de passe. Ledit l'un du fond supérieur et du fond inférieur peut comporter quatre cloisons de retournement, dont une comporte un moyen de communication entre deux zones de passe, de sorte à former quatre secteurs angulaires associés aux quatre zones de passe. Ledit l'autre du fond supérieur et du fond inférieur peut comporter quatre cloisons de retournement, dont deux comporte chacune un moyen de communication entre deux zones de passe, de sorte à former quatre secteurs angulaires associés aux quatre zones de passe.

Par ailleurs, selon une deuxième réalisation, le réacteur échangeur peut se présenter sous une configuration dite « annulaire », la calandre étant de forme cylindrique et la ou les cloisons de retournement de chacun du fond supérieur et du fond inférieur étant sous forme annulaire de sorte à délimiter le fond supérieur et le fond inférieur en au moins deux espaces annulaires correspondant à au moins deux zones de passe.

En particulier, le réacteur échangeur peut comporter trois deuxièmes moyens d'injection du deuxième réactif dont deux sont situés au niveau dudit l'un du fond supérieur et du fond inférieur et un est situé au niveau dudit l'autre du fond supérieur et du fond inférieur correspondant à la présence de trois zones de passe. Ledit l'un du fond supérieur et du fond inférieur peut comporter deux cloisons de retournement annulaires, dont une comporte une pluralité de moyens de communication entre deux zones de passe, de sorte à former trois espaces annulaires associés aux trois zones de passe. Ledit l'autre du fond supérieur et du fond inférieur peut comporter deux cloisons de retournement annulaires, dont une comporte une pluralité de moyens de communication entre deux zones de passe, de sorte à former trois espaces annulaires associés aux trois zones de passe.

Par ailleurs, le ou les moyens de communication peuvent être des orifices de communication formés dans la ou les cloisons de retournement correspondantes.

En variante, le ou les moyens de communication peuvent être des tubes de communication reliant fluidiquement deux zones de passe au niveau de la ou des cloisons de retournement correspondantes.

En variante encore, le ou les moyens de communication peuvent correspondre chacun à un mélangeur, situé en dehors de la calandre, et relié fluidiquement à une première zone de passe par un premier tube et à une deuxième zone de passe par un deuxième tube.

En outre, le premier réactif peut comporter du dihydrogène et le deuxième réactif peut comporter du dioxyde de carbone (CO₂), un mélange de dioxyde de carbone (CO₂) et de monoxyde de carbone (CO) ou un mélange de dioxyde de carbone (CO₂), de monoxyde de carbone (CO) et d'eau (H₂O), le réacteur échangeur étant destiné à la mise en œuvre d'une réaction de synthèse de méthane (CH₄).

En variante, le premier réactif peut comporter du dihydrogène (H₂) et le deuxième réactif peut comporter du dioxyde de carbone (CO₂), du monoxyde de carbone (CO) ou un mélange de dioxyde de carbone (CO₂) et de monoxyde de carbone (CO), le réacteur échangeur étant destiné à la mise en œuvre d'une réaction de synthèse de méthanol (CH₃OH).

Préférentiellement, le réacteur échangeur est mis en œuvre pour la méthanation d'un mélange H₂/CO₂. Il peut également être utilisé pour la méthanation de mélanges H₂/CO₂/CO ou H₂/CO₂/CO/H₂O, ou encore pour la synthèse de méthanol à partir de mélanges H₂/CO ou H₂/CO₂/CO dans la mesure où les proportions de réactifs ne conduisent pas à une dégradation dudit au moins un catalyseur par dépôts de carbone ou à une perte globale de sélectivité. Par la suite, la description de l'invention sera faite avec l'exemple de la méthanation d'un mélange H₂/CO₂ sans pour autant être limitée à cet exemple.

Avantageusement, l'invention permet une injection étagée mais prévoit que le débit total du premier réactif, notamment le dihydrogène, soit injecté en entrée du réacteur échangeur et que seul le deuxième réactif, notamment le dioxyde de carbone, soit injecté de façon étagée en plusieurs endroits du réacteur échangeur. Cette configuration présente de nombreux avantages par rapport aux solutions de l'art antérieur visant à injecter des réactifs pré-mélangés.

En particulier, le dégagement de chaleur est limité par l'avancement de la réaction qui est elle-même contrôlée par le réactif limitant, ici le deuxième réactif, notamment le dioxyde de carbone. Cela constitue un avantage important car en choisissant la proportion du deuxième réactif injectée en chaque point, on peut garantir une température maximale dans le réacteur échangeur qui sera dans tous les cas inférieure à l'élévation de température adiabatique correspondant à la proportion de deuxième réactif, notamment de dioxyde de carbone, pouvant réagir.

De plus, le premier réactif, notamment le dihydrogène, étant injecté entièrement dès l'entrée du réacteur échangeur, tout le débit de capacité calorifique de celui-ci est disponible pour réduire l'élévation de température dans le réacteur échangeur.

En outre, la réaction de méthanation étant très sélective vers le méthane lorsque des catalyseurs constitués de métaux, comme le nickel, le cobalt, le rhodium ou le ruthénium, sont utilisés à des températures modérées, comprises entre 250°C et 400°C, l'utilisation d'un mélange en sur-stœchiométrie d'hydrogène ne produit pas d'effets négatifs sur la sélectivité en méthane.

De même, la formation de dépôts de carbone est limitée par l'utilisation d'un mélange en sur-stœchiométrie d'hydrogène sur une grande partie du réacteur échangeur.

Par ailleurs, ledit au moins un catalyseur peut comporter un métal, notamment du nickel, du cobalt, du rhodium et/ou du ruthénium.

En outre, les tubes peuvent avantageusement être ininterrompus, étant dépourvus de tout orifice d'injection du premier réactif et/ou du deuxième réactif, contrairement aux solutions de l'art antérieur. Dans la présente invention, les fonds supérieur et inférieur sont modifiés pour constituer des boîtes de retournement dans lesquelles sont réalisées les injections étagées.

Ainsi, la simplicité du réacteur échangeur à tubes et calandre peut être préservée puisque les tubes ne sont pas interrompus, ce qui permet d'obtenir des coûts de fabrication très réduits, notamment lorsque les réacteurs échangeurs sont de grande dimension, typiquement de plusieurs centaines à plusieurs milliers de tubes.

Ledit au moins un catalyseur peut être introduit dans le réacteur échangeur sous forme de particules, par exemple de type sphérique, pastille (ou « pellet » en anglais), trilobe, entre autres, ou de dépôt catalytique sur un matériau support, par exemple de type mousse, nid d'abeilles, structure tridimensionnelle, entre autres, en céramique ou métallique, par exemple de type métal pur ou alliages tels que l'acier inox, les alliages d'aluminium, entre autres.

Par ailleurs, la puissance thermique générée étant limitée par l'absence du deuxième réactif, notamment le dioxyde de carbone, et plus seulement par les échanges thermiques, il peut être possible d'augmenter le diamètre des tubes et donc de réduire les coûts de fabrication et d'augmenter la compacité des réacteurs échangeurs.

En outre, les injections sont réalisées par la modification des fonds supérieur et inférieur, au nombre de deux et facilement fabricables, ce qui limite donc le surcoût de l'injection étagée et le rend indépendant de la taille du réacteur échangeur.

De même, les fonds supérieur et inférieur peuvent être agencés pour former un nombre quelconque de retournements, et donc de passes, ce qui permet de moduler le nombre d'injections, notamment de 4 à 12, et permet de moduler le nombre de tubes par passe, c'est-à-dire le temps de séjour par passe, à savoir le ratio de volume du lit catalytique sur le débit volumique de réactif.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
La figure 1 représente un graphique illustrant l'évolution de la température T, exprimée en degrés Celsius (°C), et du taux de conversion t en CO₂, en fonction de la longueur L d'un réacteur à injection directe, exprimée en mètres (m),
La figure 2 représente un graphique illustrant l'évolution de la température T, exprimée en degrés Celsius (°C), et du taux de conversion t en CO₂, en fonction de la longueur L d'un réacteur échangeur conforme à l'invention à injection étagée, exprimée en mètres (m),
La figure 3 illustre, selon une vue « dépliée », un premier exemple de réacteur échangeur conforme à l'invention, selon une configuration dite « en secteurs angulaires »,
La figure 4 illustre, en coupe transversale, le réacteur échangeur de la figure 3 au niveau de sa partie courante afin de visualiser le faisceau de tubes,
La figure 5 illustre, en coupe transversale, le réacteur échangeur de la figure 3 au niveau du fond supérieur,
La figure 6 illustre, en coupe transversale, le réacteur échangeur de la figure 3 au niveau du fond inférieur,
La figure 7 illustre, schématiquement en coupe transversale, l'utilisation d'un mélangeur entre deux zones de passe au niveau du fond supérieur du réacteur échangeur de la figure 3,
La figure 8 illustre, selon une vue en coupe longitudinale, un deuxième exemple de réacteur échangeur conforme à l'invention, selon une configuration dite « annulaire »,
La figure 9 illustre, en coupe transversale, le réacteur échangeur de la figure 8 au niveau du fond supérieur, et
La figure 10 illustre, en coupe transversale, le réacteur échangeur de la figure 8 au niveau du fond inférieur.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Dans les exemples qui vont suivre, le réacteur échangeur à tubes et calandre 1 conforme à l'invention est mis en œuvre pour une réaction de méthanation à partir d'un mélange H₂/CO₂ sans que cela ne soit limitatif. Le premier réactif est donc du dihydrogène H₂ et le deuxième réactif est du dioxyde de carbone CO₂.

Avantageusement, comme il va être décrit par la suite, le réacteur échangeur 1 comporte des fonds supérieur 3 et inférieur 4 modifiés de sorte à constituer des retournements de fluide et à permettre l'injection et le mélange de CO₂ au flux principal d'H₂ et formant ainsi une injection étagée. Cette configuration permet de contrôler l'élévation de la température dans le catalyseur par la limitation de la quantité du deuxième réactif, ici le CO₂, tout en bénéficiant du débit de capacité calorifique de l'hydrogène introduit en entrée E du réacteur échangeur 1.

Des simulations numériques permettent de montrer comment la mise en œuvre de l'invention peut être faite dans un réacteur échangeur 1 à tubes et calandre.

Dans une application typique de synthèse de substitut de gaz naturel (SNG) à partir d'un mélange H₂/CO₂ pour un débit total de réactifs de 250 Nm³/h, on utilise un réacteur échangeur comprenant 248 tubes de longueur égale à 1 m et de diamètre égal à 20 mm, organisés en 4 passes de 62 tubes, le débit par tube étant de 4 Nm³/h.

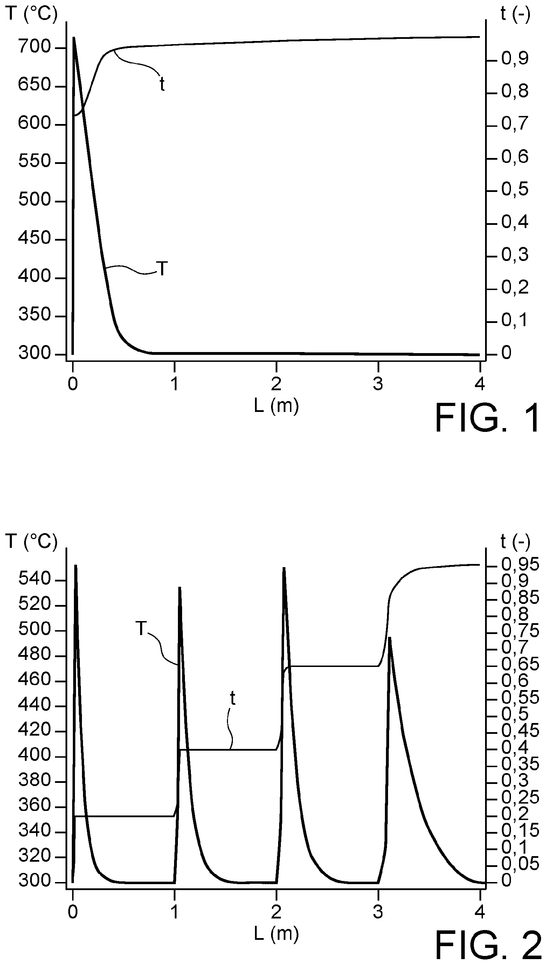

Une simulation numérique de l'évolution de la composition des gaz et de la température du réacteur échangeur est réalisée à partir du modèle de Try décrit dans l'article « Dynamic Modeling and Simulations of the Behavior of a Fixed-Bed Reactor-Exchanger Used for CO2 Methanation », R. Try et al, AlChE Journal, vol. 64, no. 2, pages 368-380, février 2018. Pour un refroidissement externe à la température de T = 300°C et un coefficient d'échange de 600 W/m²/K, on obtient le graphique représenté à la figure 1, illustrant l'évolution de la température T, exprimée en degrés Celsius (°C), et du taux de conversion t en CO₂, en fonction de la longueur L d'un réacteur échangeur à injection directe, exprimée en mètres (m). Autrement dit, on obtient une température T maximale de 715°C et un taux de conversion t de CO₂ de 97 %.

Si par contre, on procède à une injection de CO₂ étagée, conformément à l'invention, en 4 points : 25 % à l'entrée du réacteur échangeur ; 25 % après 1 m, c'est-à-dire au premier retournement ; 25 % à 2 m, c'est-à-dire au second retournement ; et les 25 % restants à 3 m, c'est-à-dire au dernier retournement, en conservant les autres conditions identiques, on obtient une température T maximale de 550°C et un taux de conversion t de 95 %, comme visible sur la figure 2, ce qui est un résultat particulièrement intéressant si l'on considère que 550°C est la température au-delà de laquelle le frittage du catalyseur s'accélère.

En définitif, la simulation numérique montre que l'on peut conserver un taux de conversion t élevé, 95 % contre 97 %, en limitant la température maximale dans le catalyseur, 550°C contre 715°C, par l'utilisation ici de trois injections réparties, à savoir une à chaque retournement dans le réacteur échangeur.

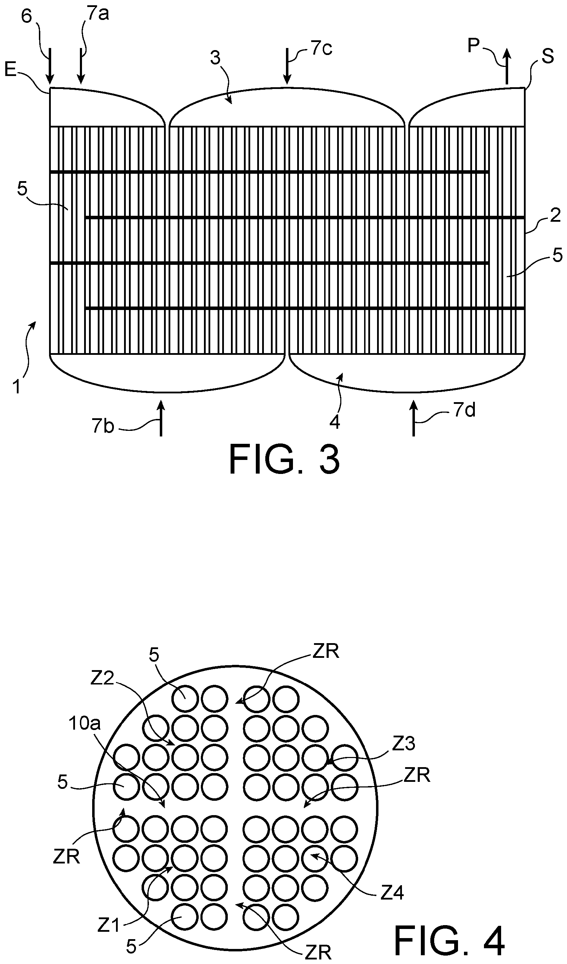

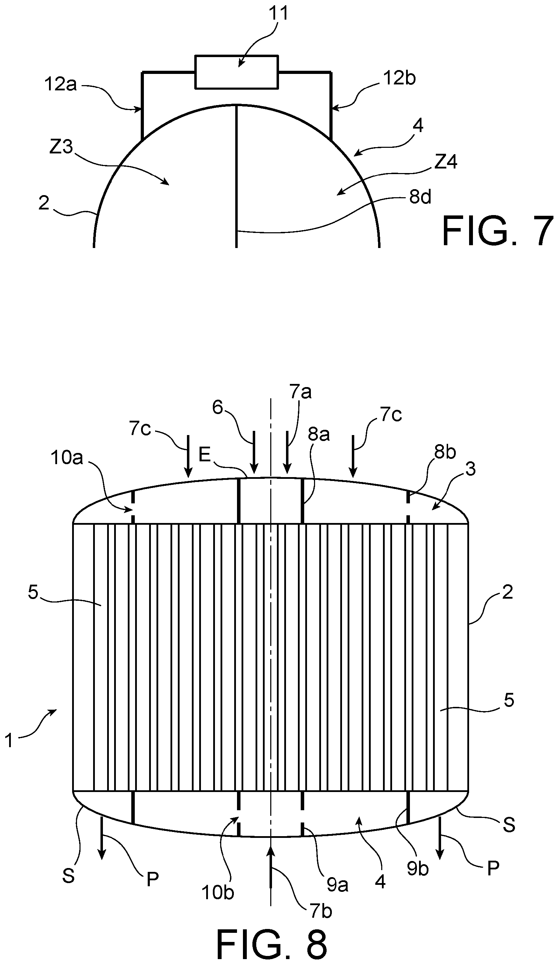

On va maintenant décrire en référence aux figures 3 à 7 un premier exemple de réalisation d'un réacteur échangeur 1 conforme à l'invention, puis en référence aux figures 8 à 10 un deuxième exemple de réalisation d'un réacteur échangeur 1 conforme à l'invention.

De façon commune aux deux exemples de réalisation des figures 3 à 7 et 8 à 10, le réacteur échangeur à tubes et calandre 1 comporte une enceinte verticale formant la calandre 2. Cette calandre 2 est de forme cylindrique. Elle comprend un fond supérieur 3 et un fond inférieur 4, représentés notamment sur les figures 3 et 8.

A l'intérieur de la calandre 2 se trouve un faisceau de tubes 5 verticaux, qui s'étendent entre le fond supérieur 3 et le fond inférieur 4. Ces tubes 5 comportent un catalyseur tel que décrit précédemment.

Comme visible sur les figures 3 et 8, de façon commune aux deux modes de réalisation, un premier et unique moyen d'injection d'entrée 6 d'un premier réactif, ici du dihydrogène H₂, est formé pour permettre l'injection au niveau du fond supérieur 3 du réacteur échangeur 1. Autrement dit, toute la quantité de H₂ est injectée à ce niveau, précisément en entrée E du réacteur échangeur 1.

Par ailleurs, le réacteur échangeur 1 comporte encore plusieurs deuxièmes moyens d'injection d'un deuxième réactif, ici le dioxyde de carbone CO₂. Dans l'exemple de la figure 3, il existe quatre deuxièmes moyens d'injection 7a, 7b, 7c et 7d tandis que dans l'exemple de la figure 8, il existe trois deuxièmes moyens d'injection 7a, 7b et 7c. Ces injections de CO₂ sont réalisées en plusieurs endroits distincts du réacteur échangeur 1 de sorte à assurer une injection étagée du deuxième réactif.

Il est à noter qu'au moins un deuxième moyen d'injection d'entrée 7a de CO₂ est prévu en entrée E du réacteur échangeur 1. En effet, les réactifs H₂ et CO₂ sont nécessairement mélangés pour la première injection en entrée E du réacteur échangeur 1, dans le volume du fond supérieur 3, comme représenté sur les figures 3 et 8. Il est à noter que cette injection pourrait aussi avoir lieu au niveau du fond inférieur 4. Toutefois, une injection au niveau du fond supérieur 3 est souvent préférée car cela limite le risque de fluidisation des particules de catalyseur. Cet aspect est moins critique pour les injections ultérieures de CO₂ dont le débit volumique est bien plus faible que la première injection.

Par ailleurs, il faut noter que le premier moyen d'injection d'entrée 6 peut être distinct du deuxième moyen d'injection d'entrée 7a. Toutefois, de façon avantageuse, le deuxième moyen d'injection d'entrée 7a correspond au premier moyen d'injection d'entrée 6, ceux-ci étant donc confondus, car l'injection d'un mélange du premier réactif et du deuxième réactif en entrée du réacteur échangeur 1 avec un seul et unique premier moyen d'injection permet d'économiser un organe d'injection.

Les réactifs peuvent être injectés dans le fond supérieur 3 et le fond inférieur 4 par le biais de tubes d'alimentation. Le débit d'injection peut être régulé par un moyen actif, tel qu'un régulateur de débit, ou encore par un moyen passif, tel qu'une perte de charge calibrée.

Par ailleurs, le réacteur échangeur 1 comporte encore une évacuation du produit formé P, ici un mélange de H₂, CO₂, CH₄ et H₂O, situé en sortie S du réacteur échangeur1.

Toujours de façon commune aux deux exemples de réalisation des figures 3 et 8, le fond supérieur 3 comporte plusieurs cloisons de retournement 8a, 8b, 8c, 8d, chacune délimitant deux zones de passe Z1, Z2, Z3, Z4 de réactifs s'étendant sur toute la hauteur verticale du réacteur échangeur 1. Le fond inférieur 4 comporte aussi plusieurs cloisons de retournement 9a, 9b, 9c, 9d, chacune délimitant deux zones de passe Z1, Z2, Z3, Z4 de réactifs s'étendant sur toute la hauteur verticale du réacteur échangeur 1.

De plus, des cloisons de retournement 8a, 8b, 9a, 9b, 9d sont prévues pour comprendre des moyens de communication 10a, 10b, 10c permettant une communication fluidique entre les deux zones de passe Z1, Z2, Z3, Z4 délimitées chaque cloison de retournement 8a, 8b, 9a, 9b, 9d.

Le premier et unique moyen d'injection 6 et un moyen d'injection 7a de deuxième réactif en entrée E du réacteur échangeur 1 sont situés au niveau du fond supérieur 3, et au moins un deuxième moyen d'injection 7b, 7c, 7d est situé au niveau du fond inférieur 4. De cette façon, les premier et deuxième réactifs parcourent une pluralité de fois la hauteur verticale du réacteur échangeur 1 réalisant une pluralité de passes par le biais des zones de passe Z1, Z2, Z3, Z4.

On va maintenant décrire plus précisément le mode de réalisation des figures 3 à 7 qui correspond à une configuration dite en « secteurs angulaires ».

Dans ce cas, les cloisons de retournement 8a, 8b, 8c, 8d, 9a, 9b, 9c, 9d délimitent le fond supérieur 3 et le fond inférieur 4 en au moins deux sections angulaires correspondant à au moins deux zones de passe Z1, Z2, Z3, Z4.

Précisément, le réacteur échangeur 1 comporte quatre deuxièmes moyens d'injection 7a, 7b, 7c, 7d du deuxième réactif dont deux 7a, 7c sont situés au niveau du fond supérieur 3 et deux autres 7b, 7d sont situés au niveau du fond inférieur 4. Cela correspond donc à la présence de quatre zones de passe Z1, Z2, Z3, Z4.

Ainsi, le fond supérieur 3 comporte quatre cloisons de retournement 8a, 8b, 8c, 8d, dont une 8a comporte un moyen de communication 10a entre deux zones de passe Z2 et Z3, de sorte à former quatre secteurs angulaires associés aux quatre zones de passe Z1, Z2, Z3, Z4. De plus, le fond inférieur 4 comporte quatre cloisons de retournement 9a, 9b, 9c, 9d, dont deux 9b, 9d comporte chacune un moyen de communication 10b, 10c entre deux zones de passe Z1, Z2 et Z3, Z4, de sorte à former quatre secteurs angulaires associés aux quatre zones de passe Z1, Z2, Z3, Z4.

Autrement dit, chacune des passes Z1, Z2, Z3, Z4 du fluide réactif correspond à un secteur angulaire, et exactement ici un quart du réacteur échangeur 1.

Il est à noter que la figure 3 est une vue « dépliée » du réacteur échangeur 1, c'est-à-dire que le fond supérieur 3 et le fond inférieur 4 sont représentés plusieurs fois. Le réacteur échangeur 1 est ainsi un réacteur à tubes et calandre à quatre injections étagées dans sa configuration dite en « secteurs angulaires ».

Au niveau des injections 6 et 7a représentées, l'hydrogène et une partie du flux de CO₂ sont injectés dans le fond supérieur 3 en entrée E du réacteur échangeur 1 et réagissent dans les huit tubes 5 représentés. Le fond inférieur 4 est agencé de façon à permettre l'injection d'un second flux 7b de CO₂ ainsi que la canalisation du fluide vers la seconde passe Z2 représentée aussi par huit tubes 5. Lorsque le fluide retourne dans le fond supérieur 3 après avoir poursuivi la réaction dans les huit tubes 5 de la seconde passe Z2, le troisième flux 7c de CO₂ est injecté et le fluide est canalisé vers les huit tubes 5 de la troisième passe Z3. Enfin, lorsque le fluide retourne dans le fond inférieur 4, le quatrième et dernier flux 7d de CO₂ est injecté et le fluide est canalisé vers les huit tubes de la quatrième passe Z4.

La figure 4 illustre la partie courante du réacteur échangeur 1. Cette partie courante est constituée du faisceau de tubes 5 cylindriques qui sont maintenus par deux plaques tubulaires. Les tubes 5 sont positionnés de façon à ce qu'ils ne soient pas au droit des cloisons ou voiles de retournement des fond supérieur 3 et inférieur 4. Ainsi, les tubes 5 sont positionnés dans les zones de passe Z1, Z2, Z3, Z4 de sorte à être non superposés verticalement avec les cloisons de retournement 8a, 8b, 8c, 8d, 9a, 9b, 9c, 9d. Ils ne sont donc pas positionnés dans les zone ZR de superposition aux cloisons représentées sur la figure 4.

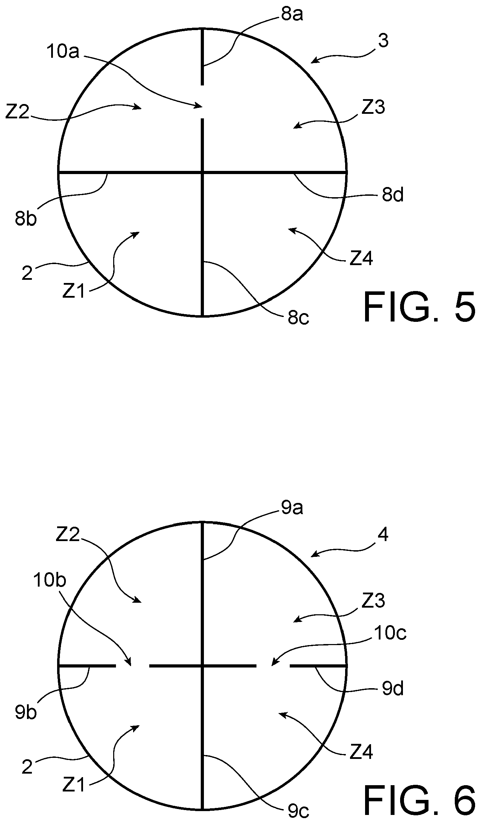

La figure 5 illustre une coupe du fond supérieur 3 montrant les cloisons ou voiles de retournement 8a, 8b, 8c, 8d et le moyen de communication, ici sous forme d'orifice de communication 10a, entre les deuxième Z2 et troisième Z3 zones de passe.

De même, la figure 6 illustre une coupe du fond inférieur 4 montrant les cloisons ou voiles de retournement 9a, 9b, 9c, 9d et les moyens de communication, ici sous forme d'orifices de communication 10b et 10c, entre les première Z1 et deuxième Z2, et entre les troisième Z3 et quatrième Z4, zones de passe.

Ainsi, les fonds supérieur 3 et inférieur 4 sont modifiés de façon à organiser la circulation des passes Z1, Z2, Z3, Z4 et promouvoir le mélange des réactifs H₂ et CO₂ par l'ajout des cloisons ou voiles de retournement.

Au contraire, dans l'art antérieur, on utilise une seule passe de réactifs, les fonds supérieur et inférieur étant dépourvus de toute cloison de séparation et de tout orifice de communication. Un fond supérieur ou inférieur selon l'art antérieur comprend un volume vide alors qu'ici, au moins deux zones séparées existent qui sont mises ou non en communication fluidique.

Il est à noter que de façon préférentielle, comme selon les exemples présentés ici, les moyens de communication 10a, 10b, 10c se présentent sous la forme d'orifices de communication formés dans les cloisons de retournement. De tels orifices sont calibrés pour promouvoir le mélange par une turbulence importante.

Toutefois, il pourrait aussi s'agir de tubes de communication reliant fluidiquement deux zones de passe au niveau d'une cloison. Un tel tube aura alors un rapport de longueur sur diamètre important, typiquement supérieur à 10, et de préférence supérieur à 20.

En outre, comme illustré par la figure 7, les moyens de communication 10a, 10b, 10c peuvent aussi correspondre chacun à un mélangeur statique 11, situé en dehors de la calandre 2, et relié fluidiquement à une première zone de passe Z3 par un premier tube 12a et à une deuxième zone de passe Z4 par un deuxième tube 12b.

On va maintenant décrire un deuxième mode de réalisation d'un réacteur échangeur 1 conforme à l'invention, par référence aux figures 8 à 10, dans une configuration dite « annulaire ».

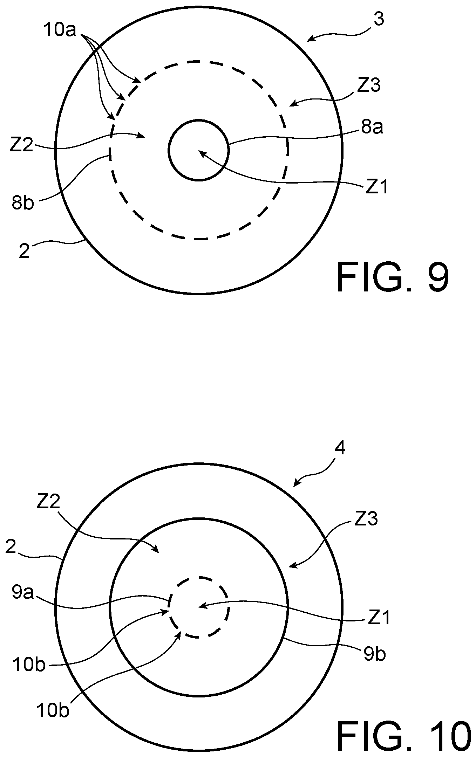

Dans ce cas, comme visible sur les figures 9 et 10, les cloisons de retournement 8a, 8b du fond supérieur 3 et les cloisons de retournement 9a, 9b du fond inférieur 4 sont sous forme annulaire de sorte à délimiter respectivement le fond supérieur 3 et le fond inférieur 4 en au moins deux espaces annulaires, ici trois espaces annulaires, correspondant à au moins deux zones de passe, ici trois zones de passe Z1, Z2, Z3.

Plus précisément, le réacteur échangeur 1 comporte trois deuxièmes moyens d'injection 7a, 7b, 7c de CO₂ dont deux 7a, 7c sont situés au niveau du fond supérieur 3 et un autre 7b est situé au niveau du fond inférieur 4 correspondant à la présence de trois zones de passe Z1, Z2 et Z3.

Le fond supérieur 3 comporte deux cloisons de retournement annulaires 8a et 8b, dont une 8b comporte une pluralité de moyens de communication 10a, ici sous forme d'orifices de communication, entre deux zones de passe Z2, Z3, de sorte à former trois espaces annulaires associés aux trois zones de passe Z1, Z2, Z3.

De plus, le fond inférieur 4 comporte deux cloisons de retournement annulaires 9a, 9b, dont une 9a comporte une pluralité de moyens de communication 10b, ici sous forme d'orifices de communication, entre deux zones de passe Z1, Z2, de sorte à former trois espaces annulaires associés aux trois zones de passe Z1, Z2, Z3.

La configuration dite « annulaire » est ainsi telle que chacune des passes Z1, Z2, Z3, Z4 du fluide réactif correspond à un espace annulaire, à l'exception de la passe centrale Z1 qui est plutôt vue comme cylindrique. Ces espaces annulaires formés sont concentriques.

L'hydrogène et une partie du CO₂ sont injectés aux points d'injection 6 et 7a dans le fond supérieur 3 au droit de l'espace cylindrique central et réagissent dans les trois tubes 5 représentés sur la figure 8. Le fond inférieur 4 est agencé de façon à permettre l'injection d'un second flux 7b de CO₂ ainsi que la canalisation du fluide vers la seconde passe Z2 représentée par dix tubes 5. Lorsque le fluide retourne dans le fond supérieur 3 après avoir poursuivi la réaction dans les huit tubes 5 de la seconde passe Z2, le troisième flux 7c de CO₂ est injecté et le fluide est canalisé vers les quatre tubes 5 de la troisième passe Z3, puis le produit obtenu P sort du réacteur échangeur 1 par le fond inférieur 4 au niveau de la sortie S.

Comme précédemment, la partie courante du réacteur échangeur 1 est constituée du faisceau de tubes cylindriques 5 maintenus par deux plaques tubulaires. Les tubes 5 sont positionnés de façon à ce qu'ils ne soient pas au droit de cloisons ou de voiles de retournement des fond supérieur 3 et inférieur 4 dont la trace est cylindrique dans cette configuration.

Les fonds supérieur 3 et inférieur 4 sont modifiés de façon à organiser la circulation des passes et promouvoir le mélange des réactifs H₂ et CO₂, comme visible sur les figures 9 et 10.

Avantageusement, la configuration dite « annulaire » permet de s'appuyer sur le fait que la surface frontale du réacteur échangeur 1 augmente avec son rayon. Il est donc plus simple d'avoir peu de tubes 5 dans une zone proche du centre et un nombre plus élevé de tubes 5 dans une zone proche de la périphérie du réacteur échangeur 1. Cela peut s'avérer particulièrement intéressant dans le cas du souhait d'un temps de séjour différent et notamment faible dans une zone et grand dans une autre. En particulier, il est possible de limiter la réaction dans une zone en réduisant le temps de séjour et augmenter la réaction dans une autre zone en augmentant le temps de séjour.

La configuration dite en « secteurs angulaires » permet aussi d'organiser des temps de séjour différents en utilisant plus ou moins de tubes 5 par passe, mais avec moins de souplesse que dans une configuration dite « annulaire ». Par contre, les tubes 5 étant disposés dans une zone limitée spatialement (un secteur angulaire), il est plus facile d'obtenir une distribution de débits égale dans chaque tube 5 que dans une configuration dite « annulaire » dans laquelle les tubes 5 d'une même passe sont répartis sur 360°.

L'organisation de l'écoulement peut être réalisé de la manière décrite ci-après. Ainsi, dans la configuration dite en « secteurs angulaires » décrite ci-dessus, le réacteur échangeur 1 est divisé en quatre secteurs angulaires formant quatre passes Z1 à Z4 comportant un nombre de tubes 5 identique. Dans la configuration dite « annulaire » décrite ci-dessus, le réacteur échangeur 1 est divisé en deux espaces annulaires et un espace cylindrique formant trois passes Z1 à Z3, le nombre de tubes 5 par passe étant différent.

Dans les deux cas, un nombre différent de passes peut être choisi et le nombre de tubes 5 par passe peut être choisi de façon à imposer un temps de séjour différent dans les différentes passes. On peut en particulier augmenter le temps de séjour de la dernière passe afin d'augmenter le taux de conversion en lui affectant simplement un nombre de tubes 5 plus élevé. On peut aussi diminuer le temps de séjour de la première passe afin d'y limiter la conversion lui affectant un nombre de tubes 5 plus faible. L'organisation exacte dépend de l'application car elle est très dépendante de l'activité du catalyseur.

Par ailleurs, dans la mise en œuvre du réacteur échangeur 1 conforme à l'invention, une préchauffe des gaz est avantageusement réalisée comme décrite ci-après. En effet, les catalyseurs nécessaires pour la réaction de méthanation n'étant actifs qu'à partir d'une certaine température, typiquement comprise entre 250 et 300°C, il est souhaitable de chauffer les gaz réactifs à cette température, soit à l'extérieur du réacteur échangeur 1 à l'aide d'un échangeur de chaleur, soit à l'intérieur du réacteur échangeur 1 en dédiant une zone de préchauffe qui utilise à cet effet la chaleur dégagée par la réaction.

Selon une configuration préférée, la chaleur des gaz sortant du réacteur échangeur 1 est utilisée grâce à un échangeur externe pour préchauffer le flux pré-mélangé d'hydrogène et de la première injection de CO₂. La chaleur nécessaire pour préchauffer les injections suivantes de CO₂, comprise entre 25°C et 300°C, est de 9 kJ/mol de CO₂ total. Cette chaleur est faible par rapport à la chaleur de réaction de 169 kJ/mol de CO₂ converti et peut être apportée simplement par le mélange dans les fonds du CO₂ injecté avec le flux de gaz dans le réacteur sans nécessiter de préchauffe. Il en résulte une plus grande simplicité du système.

Alternativement, les flux de CO₂ à injecter peuvent être préchauffés par simple contact des tubes d'alimentation avec la calandre 2 si ceux-ci sont placés à l'intérieur de l'enveloppe calorifuge.

En outre, un refroidissement du réacteur échangeur 1 est préférentiellement effectué lors de sa mise en œuvre comme décrit ci-après. En effet, le refroidissement du réacteur échangeur 1 peut être assuré par la circulation d'un fluide caloporteur, de préférence de l'huile, de l'eau sous pression ou des sels fondus de la même façon que pour un réacteur à tubes et calandres classique.

Dans la configuration la plus simple, le fluide caloporteur ne constitue qu'un circuit et un certain nombre de passes est organisé pour promouvoir l'échange avec les tubes réactifs de chaque secteur. Il est aussi possible d'organiser la circulation du fluide caloporteur dans la calandre 2 de façon à créer plusieurs circuits différents. Dans ce cas, on disposera dans la calandre des cloisons verticales planes dans le cas d'une configuration en « secteurs angulaires », ou cylindriques dans le cas d'une configuration « annulaire », et on mettra en place une tubulure d'entrée et une tubulure de sortie pour chaque circuit. La gamme de températures d'entrée du fluide caloporteur dépend de la réaction considérée et du catalyseur utilisé. Pour une réaction d'hydrogénation de CO/CO₂, elle sera typiquement dans la gamme 150 à 400°C, et de préférence dans la gamme 250 à 350°C.

Bien entendu, l'invention n'est pas limitée aux exemples de réalisation qui viennent d'être décrit auparavant. Diverses modifications peuvent y être apportées par l'homme du métier.

## Revendications

1. Réacteur échangeur à tubes et calandre (1), destiné à la mise en œuvre de réactions endothermiques ou exothermiques, **caractérisé en ce qu'**il comporte :
- une enceinte verticale formant calandre (2), comprenant un fond supérieur (3) et un fond inférieur (4),
- un faisceau de tubes (5) verticaux, s'étendant entre le fond supérieur (3) et le fond inférieur (4), à l'intérieur de la calandre (2), et comprenant au moins un catalyseur,
- un premier et unique moyen d'injection d'entrée (6) d'un premier réactif, en entrée (E) du réacteur échangeur (1),
- une pluralité de deuxièmes moyens d'injection (7a, 7b, 7c, 7d) d'un deuxième réactif, distinct du premier réactif, en plusieurs endroits distincts du réacteur échangeur (1) de sorte à assurer une injection étagée du deuxième réactif, les deuxièmes moyens d'injection (7a, 7b, 7c, 7d) comprenant au moins un deuxième moyen d'injection d'entrée (7a) de deuxième réactif en entrée (E) du réacteur échangeur (1),
- une évacuation du produit formé (P) en sortie (S) du réacteur échangeur (1),
l'un du fond supérieur (3) et du fond inférieur (4) comportant une ou plusieurs cloisons de retournement (8a, 8b, 8c, 8d ; 9a, 9b, 9c, 9d), chacune délimitant deux zones de passe (Z1, Z2, Z3, Z4) de réactifs s'étendant sur toute la hauteur verticale du réacteur échangeur (1), et l'autre du fond supérieur (3) et du fond inférieur (4) comportant une ou plusieurs cloisons de retournement (8a, 8b, 8c, 8d ; 9a, 9b, 9c, 9d), chacune délimitant deux zones de passe (Z1, Z2, Z3, Z4) de réactifs s'étendant sur toute la hauteur verticale du réacteur échangeur (1) et au moins une cloison de retournement (8a, 8b, 8c, 8d ; 9a, 9b, 9c, 9d) comprenant au moins un moyen de communication (10a, 10b) permettant une communication fluidique entre les deux zones de passe (Z1, Z2, Z3, Z4) délimitées par ladite au moins une cloison de retournement (8a, 8b, 8c, 8d ; 9a, 9b, 9c, 9d),
le premier et unique moyen d'injection d'entrée (6) et ledit au moins un deuxième moyen d'injection d'entrée (7a) de deuxième réactif en entrée (E) du réacteur échangeur (1) étant situés au niveau de l'un du fond supérieur (3) et du fond inférieur (4), et au moins un deuxième moyen d'injection (7b, 7c, 7d) étant situé au niveau de l'autre du fond supérieur (3) et du fond inférieur (4) de sorte que les premier et deuxième réactifs parcourent une pluralité de fois la hauteur verticale du réacteur échangeur (1) réalisant une pluralité de passes par le biais des zones de passe (Z1, Z2, Z3, Z4).

2. Réacteur échangeur selon la revendication 1, **caractérisé en ce que** ledit l'un du fond supérieur (3) et du fond inférieur (4) comporte plusieurs cloisons de retournement (8a, 8b, 8c, 8d ; 9a, 9b, 9c, 9d), au moins une cloison de retournement (8a, 8b, 8c, 8d ; 9a, 9b, 9c, 9d) comprenant au moins un moyen de communication (10a, 10b) permettant une communication fluidique entre les deux zones de passe (Z1, Z2, Z3, Z4) délimitées par ladite au moins une cloison de retournement (8a, 8b, 8c, 8d ; 9a, 9b, 9c, 9d), et **en ce que** ledit l'autre du fond supérieur (3) et du fond inférieur (4) comporte plusieurs cloisons de retournement (8a, 8b, 8c, 8d ; 9a, 9b, 9c, 9d), au moins deux cloisons de retournement (8a, 8b, 8c, 8d ; 9a, 9b, 9c, 9d) comprenant chacune au moins un moyen de communication (10a, 10b) permettant une communication fluidique entre les deux zones de passe (Z1, Z2, Z3, Z4) délimitées par ladite au moins une cloison de retournement (8a, 8b, 8c, 8d ; 9a, 9b, 9c, 9d).

3. Réacteur échangeur selon la revendication 1 ou 2, **caractérisé en ce que** ledit l'un du fond supérieur (3) et du fond inférieur (4) est le fond supérieur (3), **en ce que** ledit l'autre du fond supérieur (3) et du fond inférieur (4) est le fond inférieur (4), et **en ce que** le premier et unique moyen d'injection d'entrée (6) et ledit au moins un deuxième moyen d'injection d'entrée (7a) de deuxième réactif en entrée (E) du réacteur échangeur (1) sont situés au niveau du fond supérieur (3), et au moins un deuxième moyen d'injection (7b, 7c, 7d) est situé au niveau du fond inférieur (4).

4. Réacteur échangeur selon l'une des revendications précédentes, **caractérisé en ce que** les tubes (5) sont positionnés dans les zones de passe (Z1, Z2, Z3, Z4) de sorte à être non superposés verticalement avec la ou les cloisons de retournement (8a, 8b, 8c, 8d ; 9a, 9b, 9c, 9d).

5. Réacteur échangeur selon l'une quelconque des revendications précédentes, **caractérisé en ce que** les tubes (5) sont ininterrompus, étant dépourvus de tout orifice d'injection du premier réactif et/ou du deuxième réactif.

6. Réacteur échangeur selon l'une quelconque des revendications précédentes, **caractérisé en ce qu'**il se présente sous une configuration dite en « secteurs angulaires », la calandre (2) étant de forme cylindrique et la ou les cloisons de retournement (8a, 8b, 8c, 8d ; 9a, 9b, 9c, 9d) de chacun du fond supérieur (3) et du fond inférieur (4) délimitant le fond supérieur (3) et le fond inférieur (4) en au moins deux sections angulaires correspondant à au moins deux zones de passe (Z1, Z2, Z3, Z4).

7. Réacteur échangeur selon la revendication 6, **caractérisé en ce qu'**il comporte quatre deuxièmes moyens d'injection (7a, 7b, 7c, 7d) du deuxième réactif dont deux (7a, 7c) sont situés au niveau dudit l'un (3) du fond supérieur (3) et du fond inférieur (4) et deux (7b, 7d) sont situés au niveau dudit l'autre (3) du fond supérieur (3) et du fond inférieur (4) correspondant à la présence de quatre zones de passe (Z1, Z2, Z3, Z4),
**en ce que** ledit l'un (3) du fond supérieur (3) et du fond inférieur (4) comporte quatre cloisons de retournement (8a, 8b, 8c, 8d), dont une (8a) comporte un moyen de communication (10a) entre deux zones de passe (Z2, Z3), de sorte à former quatre secteurs angulaires associés aux quatre zones de passe (Z1, Z2, Z3, Z4),
et **en ce que** ledit l'autre du fond supérieur (3) et du fond inférieur (4) comporte quatre cloisons de retournement (9a, 9b, 9c, 9d), dont deux (9b, 9d) comporte chacune un moyen de communication (10b, 10c) entre deux zones de passe (Z1, Z2 ; Z3, Z4), de sorte à former quatre secteurs angulaires associés aux quatre zones de passe (Z1, Z2, Z3, Z4).

8. Réacteur échangeur selon l'une quelconque des revendications 1 à 5, **caractérisé en ce qu'**il se présente sous une configuration dite « annulaire », la calandre (2) étant de forme cylindrique et la ou les cloisons de retournement (8a, 8b ; 9a, 9b) de chacun du fond supérieur (3) et du fond inférieur (4) étant sous forme annulaire de sorte à délimiter le fond supérieur (3) et le fond inférieur (4) en au moins deux espaces annulaires correspondant à au moins deux zones de passe (Z1, Z2, Z3).

9. Réacteur échangeur selon la revendication 8, **caractérisé en ce qu'**il comporte trois deuxièmes moyens d'injection (7a, 7b, 7c) du deuxième réactif dont deux (7a, 7c) sont situés au niveau dudit l'un (3) du fond supérieur (3) et du fond inférieur (4) et un (7b) est situé au niveau dudit l'autre (3) du fond supérieur (3) et du fond inférieur (4) correspondant à la présence de trois zones de passe (Z1, Z2, Z3),
**en ce que** ledit l'un (3) du fond supérieur (3) et du fond inférieur (4) comporte deux cloisons de retournement annulaires (8a, 8b), dont une (8b) comporte une pluralité de moyens de communication (10a) entre deux zones de passe (Z2, Z3), de sorte à former trois espaces annulaires associés aux trois zones de passe (Z1, Z2, Z3),
et **en ce que** ledit l'autre du fond supérieur (3) et du fond inférieur (4) comporte deux cloisons de retournement annulaires (9a, 9b), dont une (9a) comporte une pluralité de moyens de communication (10b) entre deux zones de passe (Z1, Z2), de sorte à former trois espaces annulaires associés aux trois zones de passe (Z1, Z2, Z3).

10. Réacteur échangeur selon l'une quelconque des revendications précédentes, **caractérisé en ce que** le ou les moyens de communication (10a, 10b, 10c) sont des orifices de communication formés dans la ou les cloisons de retournement (8a, 8b, 8c, 8d ; 9a, 9b, 9c, 9d) correspondantes.

11. Réacteur échangeur selon l'une quelconque des revendications 1 à 9, **caractérisé en ce que** le ou les moyens de communication (10a, 10b, 10c) sont des tubes de communication reliant fluidiquement deux zones de passe au niveau de la ou des cloisons de retournement (8a, 8b, 8c, 8d ; 9a, 9b, 9c, 9d) correspondantes.

12. Réacteur échangeur selon l'une quelconque des revendications 1 à 9, **caractérisé en ce que** le ou les moyens de communication (10a, 10b, 10c) correspondent chacun à un mélangeur (11), situé en dehors de la calandre (2), et relié fluidiquement à une première zone de passe (Z3) par un premier tube (12a) et à une deuxième zone de passe (Z4) par un deuxième tube (12b).

13. Réacteur échangeur selon l'une quelconque des revendications précédentes, **caractérisé en ce que** le premier réactif comporte du dihydrogène (H₂) et **en ce que** le deuxième réactif comporte du dioxyde de carbone (CO₂), un mélange de dioxyde de carbone (CO₂) et de monoxyde de carbone (CO) ou un mélange de dioxyde de carbone (CO₂), de monoxyde de carbone (CO) et d'eau (H₂O), le réacteur échangeur (1) étant destiné à la mise en œuvre d'une réaction de synthèse de méthane (CH₄).

14. Réacteur échangeur selon l'une quelconque des revendications 1 à 12, **caractérisé en ce que** le premier réactif comporte du dihydrogène (H₂) et **en ce que** le deuxième réactif comporte du dioxyde de carbone (CO₂), du monoxyde de carbone (CO) ou un mélange de dioxyde de carbone (CO₂) et de monoxyde de carbone (CO), le réacteur échangeur (1) étant destiné à la mise en œuvre d'une réaction de synthèse de méthanol (CH₃OH).

15. Réacteur échangeur selon l'une quelconque des revendications précédentes, **caractérisé en ce que** ledit au moins un catalyseur comporte un métal, notamment du nickel, du cobalt, du rhodium et/ou du ruthénium.
